(19) Europäisches Patentamt

European Patent Office

Office européen des brevets

(11) **EP 0 971 337 A1**

(12) **EUROPEAN PATENT APPLICATION**
published in accordance with Art. 158(3) EPC

(43) Date of publication:
**12.01.2000 Bulletin 2000/02**

(51) Int. Cl.$^7$: **G10L 9/00**, G10L 9/18,
H04B 14/04, H03M 7/30

(21) Application number: **99901170.3**

(22) Date of filing: **26.01.1999**

(86) International application number:
**PCT/JP99/00293**

(87) International publication number:
**WO 99/38156 (29.07.1999 Gazette 1999/30)**

(84) Designated Contracting States:
**DE FR GB IT NL SE**

(30) Priority: **26.01.1998 JP 2771098**

(71) Applicant:
**MATSUSHITA ELECTRIC INDUSTRIAL CO., LTD.
Kadoma-shi, Osaka 571-8501 (JP)**

(72) Inventor: **YOSHIDA, Koji
Yokohama-shi Kanagawa 236-0057 (JP)**

(74) Representative:
**Grünecker, Kinkeldey,
Stockmair & Schwanhäusser
Anwaltssozietät
Maximilianstrasse 58
80538 München (DE)**

(54) **METHOD AND DEVICE FOR EMPHASIZING PITCH**

(57)     LPC inverse filter 301 calculates a residual signal from a decoded speech and then first lag value calculator 302 obtains first lag value T1 using residual signal r(n). Then, second lag value calculator 303 calculates second lag value T2. Second lag value T2 is calculated as a lag value corresponding to a maximum value of a correlation value of the residual signal or related value within the range centered on first lag value T1 or a lag value twice first lag value T1 or its integer part including fractional lag values before and after that lag value. The pitch weighting filter is applied to the decoded speech by using the signal waveform corresponding to the first and second lag values.

## FIG. 5

## Description

Technical Field

The present invention relates to a method and apparatus enhancing pitch in a speech decoder included on a digital speech communication apparatus such as digital cellular telephone.

Background Art

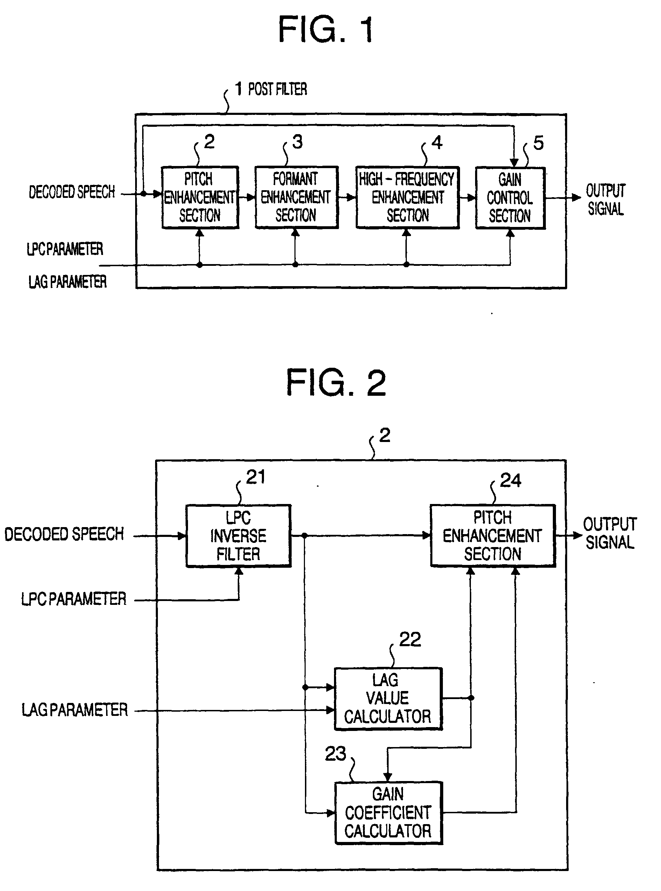

A conventional digital cellular telephone, etc. incorporates a speech encoder/decoder to efficiently compress and transmit information of speech signals. The speech decoder performs post filtering to improve the perceptual quality against deterioration of the quality of the decoded speech caused by coding. The post filtering includes pitch enhancement designed to improve the perceptual quality by enhancing pitch periodicity of the decoded signal. One of the conventional pitch enhancing methods is a technology based on the international organization ITU-T Recommendation G.729 (8 kbps CS-ACELP speech coding method). This conventional pitch enhancing method is explained below using FIG.1 and FIG.2.

FIG.1 is a block diagram showing a configuration of a post filter in the speech decoder. This post filter 1 performs pitch enhancement on a decoded speech by pitch enhancement section 2 that will be described later, and then speech spectrum enhancement by formant enhancement section 3. Then, high-frequency enhancement section 4 compensates a spectral tilt produced by formant enhancement section 3 and finally performs gain adjustment by gain control section 5 adjusting the signal power after the post filtering to the signal power before the post filtering.

FIG.2 is a block diagram showing a configuration of pitch enhancement section 2. Pitch enhancement section 2 calculates a residual signal from a decoded signal using LPC inverse filter 21 made up of LPC parameters used for speech decoding. In this conventional example, the LPC inverse filter corresponds to the numerator term of the formant enhancement filter in formant enhancement section 3 in FIG.1 and plays a part of the formant enhancement processing as well.

Lag value calculator 22 calculates a lag value using the residual signal obtained by LPC inverse filter 21. To calculate the lag value, a lag parameter used for speech decoding is used. An integer lag value corresponding to a maximum correlation value of the residual signal is determined from a range before and after the integer lag value indicated by the lag parameter and then fractional lag value T corresponding to a maximum normalized correlation value before and after the integer lag value is determined.

Gain coefficient calculator 23 calculates coefficient g that controls the gain of pitch weighting filter 24. This is calculated as a pitch prediction gain (normalized correlation value) corresponding to lag value T.

Finally, pitch weighting filter 24 carries out pitch enhancement processing on the residual signal calculated from the decoded speech by the LPC inverse filter. Pitch weighting filter Hp(z) is given in expression (1).

$$H_p(z) = \frac{1}{1+\gamma g}(1+\gamma g z^{-T}) \qquad (1)$$

Where, $\gamma$ is a constant that controls the degree of pitch enhancement.

On the other hand, when the conventional pitch enhancing method above is applied to a speech coder at a low bit rate (for example, 4 kbps) that performs more efficient coding, it is necessary to increase the degree of pitch enhancement to further suppress deterioration of the quality of the decoded speech caused by low bit rate implementation. In the conventional pitch enhancing method, it is necessary to increase constant $\gamma$ that controls the degree of pitch enhancement in expression (1) above.

However, simply increasing constant $\gamma$ has a problem of deteriorating the naturalness of the speech, and rather deteriorating the perceptual quality.

Disclosure of Invention

It is an objective of the present invention to provide an excellent pitch enhancing method and apparatus capable of carrying out high pitch enhancement with a degree of enhancement without sacrificing the naturalness of a decoded speech in a low bit rate speech coder and improving the perceptual quality.

This objective is achieved by calculating a first lag value indicating a delay to a signal waveform similar to the signal waveform subject to pitch enhancement from at least the decoded speech or lag parameters used for speech decoding, calculating at least one of other lag values indicating a delay to another signal waveform similar to said signal waveform subject to pitch enhancement based on said first lag value and enhancing the decoded speech using the signal waveforms corresponding to said plurality of lag values.

When applied to a low bit rate speech coder, this makes it possible to perform pitch enhancement with a high degree of enhancement without sacrificing the naturalness of the decoded speech and improve the perceptual quality.

Brief Description of Drawings

FIG.1 is a block diagram showing a configuration of a conventional post filter carrying out pitch enhancement;

FIG.2 is a block diagram showing a configuration of a pitch enhancement section in the conventional post filter;

FIG.3 is a block diagram showing a configuration of a radio communication apparatus equipped with a post filter of Embodiment 1 of the present invention;

FIG.4 is a block diagram showing a configuration of a speech decoder of the radio communication apparatus shown in FIG.3;

FIG.5 is a block diagram showing a configuration of a pitch enhancement section of the post filter of Embodiment 1 of the present invention;

FIG.6 is a flow diagram showing the operating procedure of the pitch enhancement operation of Embodiment 1; and

FIG.7 is a block diagram showing a configuration of a pitch enhancement section of a post filter of Embodiment 2 of the present invention.

Best Mode for Carrying out the Invention

With reference now to the attached drawings, the embodiments of the present invention are explained in detail below.

(Embodiment 1)

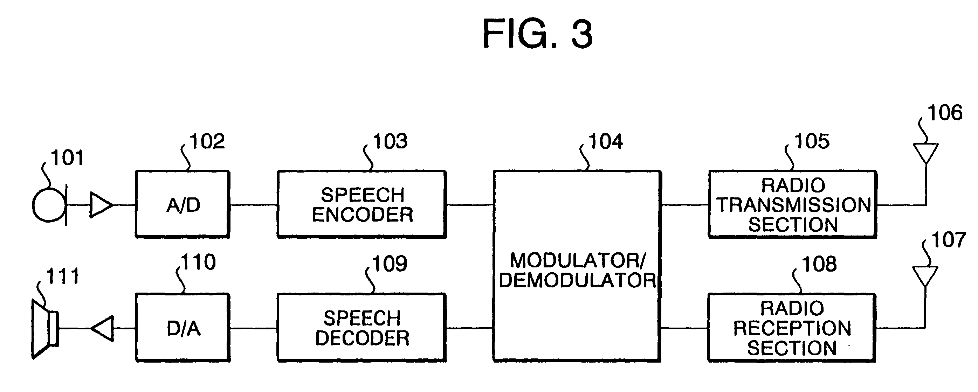

FIG.3 is a block diagram showing a configuration of a radio communication apparatus equipped with a post filter of Embodiment 1 of the present invention.

In this radio communication apparatus, the transmitting side converts a speech to an electric analog signal through speech input apparatus 101 such as a microphone and outputs it to A/D converter 102. The analog speech signal is converted to a digital speech signal by A/D converter 102 and output to speech encoder 103. Speech encoder 103 carries out speech encoding on the digital speech signal and outputs the encoded information to modulator/demodulator 104. Modulator/demodulator 104 digitally modulates the coded speech signal and sends it to radio transmission section 105. Radio transmission section 105 carries out prescribed radio transmission processing on the modulated signal. This signal is transmitted via antenna 106.

On the other hand, on the receiving side of the radio communication apparatus, a signal received by antenna 107 is subjected to prescribed radio reception processing in radio reception section 108 and sent to modulator/demodulator 104. Modulator/demodulator 104 carries out demodulation processing on the received signal and outputs the demodulated signal to speech decoder 109. Speech decoder 109 carries out decoding processing on the demodulated signal, obtains a digital decoded speech signal and outputs this digital decoded speech signal to D/A converter 110. D/A converter 110 converts the digital decoded speech signal output from speech decoder 109 to an analog decoded speech signal and outputs it to speech output apparatus 111 such as a speaker. Finally, speech output apparatus 111 converts the electric analog speech signal to a decoded speech and outputs it.

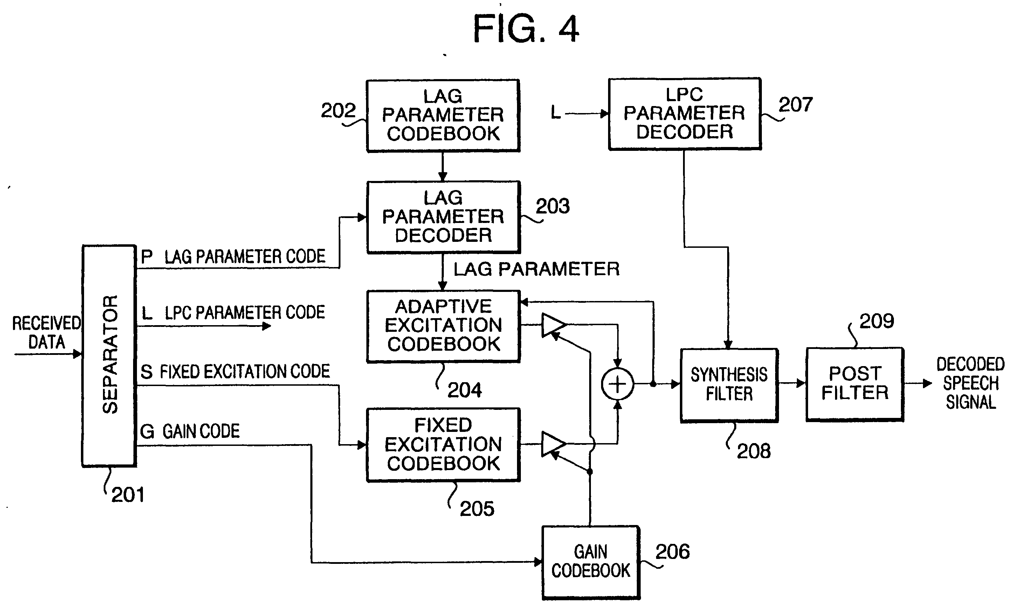

In the configuration above, speech decoder 109 has a configuration shown in FIG.4. That is, when received data are input to separator 201, LPC parameter code L that expresses quantized LPC, fixed excitation code S that expresses a fixed excitation code vector, lag parameter code P that expresses a lag value and gain code G that expresses gain information are extracted from the received data, and these codes are input to LPC decoder 201, fixed excitation codebook 205, lag parameter decoder 203 and gain codebook 206, respectively.

LPC decoder 207 decodes quantized LPC from LPC parameter code L and outputs it to synthesis filter 208. Fixed excitation codebook 205 stores a predetermined number of fixed excitation code vectors with different shapes and outputs a fixed excitation code vector specified by a fixed excitation codebook index obtained by decoding fixed excitation code S entered. This fixed excitation code vector is multiplied by a fixed excitation codebook gain which will be described later by a multiplier and then output to an adder.

Adaptive excitation codebook 204 updates excitation vector signals generated in the past one by one and buffers them at the same time, and generates an adaptive excitation code vector using a lag parameter. This lag parameter is obtained by decoding lag parameter code P entered by lag parameter decoder 203. This adaptive excitation code vector is multiplied by an adaptive excitation codebook gain that will be described later by a multiplier and then output to an adder.

Gain codebook 206 stores a predetermined number of sets(gain vectors) of adaptive excitation codebook gain and fixed excitation codebook gain and outputs the adaptive excitation codebook gain component and fixed excitation codebook gain component of a gain vector specified by a gain codebook index obtained by decoding gain code G entered to their respective multipliers.

The adder calculates a sum of the fixed excitation code vector and adaptive excitation code vector input from the multipliers to generate an excitation vector signal and outputs it to synthesis filter 208 and adaptive excitation codebook 204.

Synthesis filter 208 constructs an LPC synthesis filter using the quantization LPC entered. The excitation vector signal output from the adder is input to this synthesis filter and subjected to filtering and the synthesized signal is output to post filter 209.

Post filter 209 carries out processing for improving the subjective quality of speech signals such as pitch enhancement, formant enhancement, high-frequency enhancement and gain control on the synthesized signal input from synthesis filter 208. The output of post filter 209 is subjected to prescribed post-processing and then output as output data such as a digitized decoded speech signal.

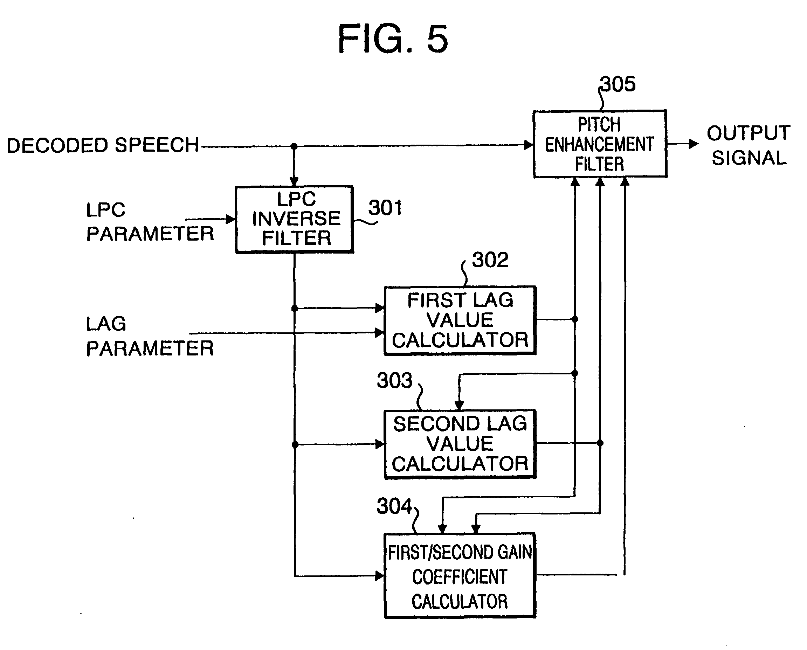

FIG.5 is a functional block diagram of the pitch enhancement section of the post filter of Embodiment 1 of the present invention. The pitch enhancement section of the post filter of Embodiment 1 comprises LPC inverse filter 101 that carries out LPC inverse filtering on the decoded speech to obtain a residual signal, first lag value calculator 102 that calculates a first lag value from the decoded speech using a lag parameter used for speech decoding, second lag value calculator 103 that calculates a second lag value from the first lag value and decoded speech, first/second gain coefficient calculator 104 that calculates a first and second gain coefficients corresponding to the first and second lag values from the first and second lag values and said decoded speech and pitch weighting filter 305 that carries out pitch weighting filtering using the decoded speech, first and second lag values and first and second gain coefficients.

The filter characteristic of pitch weighting filter 105 is shown in expression (2).

$$H_p(z)=\frac{1}{1+\gamma_1 g_1+\gamma_2 g_2}(1+\gamma_1 g_1 z^{-T_1}+\gamma_2 g_1 z^{-T_2}) \quad (2)$$

Where, T1 and T2 are the first and second lag values, g1 and g2 are the gain coefficients of the T1 and T2 pitch weighting filters and $\gamma$1 and $\gamma$2 are the constants that control the degree of pitch enhancement corresponding to lag values T1 and T2. Pitch weighting filter 105 carries out pitch enhancement using the signal of second lag value T2 in addition to the signal of first lag value T1 as shown in expression (2).

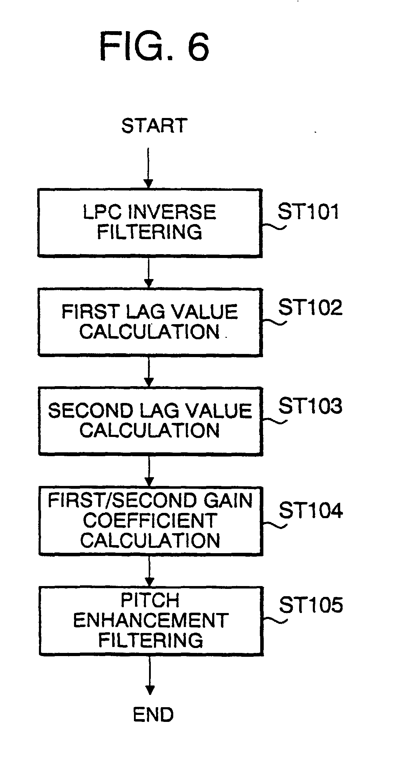

The pitch enhancement operation of Embodiment 1 configured as shown above is explained according to the processing procedure shown in FIG.6. By the way, the pitch enhancement processing of Embodiment 1 is carried out using a section of a certain length of the decoded speech as a unit. This section length corresponds to the coding unit (frame or subframe) of speech encoding/decoding processing to which pitch enhancement is applied.

First, LPC inverse filter 101 calculates residual signal r(n) (n=0, 1, ..., N-1) from decoded speech s(n) (n=0, 1, ..., N-1; N: section length) . It uses LPC parameters sent from the encoding side used for speech decoding as the LPC coefficients that compose LPC inverse filter 101. Regarding the LPC coefficients, it is possible to use the LPC parameters obtained by directly applying an LPC analysis to decoded speech s(n).

Then, first lag value calculator 102 obtains first lag value T1 from residual signal r(n). First lag value T1 can be calculated using any method. For example, the lag value corresponding to a maximum value of correlation value R(k) of the residual signal shown in expression (3) or a maximum value of normalization correlation value Rn(k) shown in expression(4) can be obtained as first lag value T1.

$$R(k)=\sum_{n=0}^{N-1} \gamma(n)\gamma_k(n) \quad (3)$$

$$R_n(k)=\frac{\sum_{n=0}^{N-1} \gamma(n)\gamma_k(n)}{\sqrt{\sum_{n=1}^{N-1} \gamma_k(n)^2}} \quad (4)$$

Where, rk(n) in expressions (3) and (4) is a residual signal in lag value k (including fractional lag value).

It is also possible to narrow the lag value range centered on an integer lag value first and then find an optimal fractional lag value within the specified range before and after the integer part. It is also possible to set the lag value itself of a lag parameter sent from the encoding side during speech decoding as a first lag value or calculate a fractional lag value within the range before and after its integer part.

First lag value T1 obtained in this way represents an amount of delay up to the position where the signal waveform most similar to the signal waveform subject to pitch enhancement. Typically, if the decoded speech signal or residual signal is a cyclic signal waveform, it indicates the distance between the target signal waveform and the signal waveform one pitch cycle before.

Then, second lag value calculator 103 calculates second lag value T2 using first lag value T1 and the residual signal. Second lag value calculation section 103 calculates the lag value corresponding to a maximum value of expression (4) within the range centered on a lag value twice first lag value T1 (or the integer part in first lag value T1) including fractional lag values before and after that value as second lag value T2. By finding the second lag value in this way, it is possible to limit the second lag value to be calculated to a more appropriate range from the first lag value and calculate the second lag value with a smaller amount of operations.

Second lag value T2 calculated in this way typically indicates the distance from the target signal waveform to the signal waveform two pitch cycles before if the decoded speech signal or residual signal is a cyclic signal waveform.

If the search range of second lag value T2 exceeds the buffer length of the residual signal, calculation of the second lag value is stopped, preventing the decoded speech signal in second lag value T2 from being used for pitch enhancement. This suppresses an increase in the buffer capacity (memory capacity) of the residual signal and decoded speech signal.

Then, first/second gain coefficient calculator 304 determines gain coefficients of the pitch weighting filters in the first and second lag values. First and second gain coefficients g1 and g2 can be calculated from expressions (5) and (6).

$$g_1 = \frac{\sum_{n=0}^{N-1} \gamma(n)\gamma_{T_1}(n)}{\sum_{n=0}^{N-1} \gamma_{T_1}(n)^2} \tag{5}$$

$$g_2 = \frac{\sum_{n=0}^{N-1} \gamma(n)\gamma_{T_2}(n)}{\sum_{n=0}^{N-1} \gamma_{T_2}(n)^2} \tag{6}$$

If values in expressions (7) and (8) which relate to g1 and g2 are thresholds Th1 and Th2 or below, pitch enhancement with that lag value is prevented. This suppresses deterioration of the perceptual quality caused by the use of a decoded speech signal with a low level of similarity for pitch enhancement.

$$\frac{\left(\sum_{n=0}^{N-1} \gamma(n)\gamma_{T_1}(n)\right)^2}{\left(\sum_{n=0}^{N-1} \gamma_{T_1}(n)^2\right)\left(\sum_{n=0}^{N-1} \gamma(n)^2\right)} \tag{7}$$

$$\frac{\left(\sum_{n=0}^{N-1} \gamma(n)\gamma_{T_2}(n)\right)^2}{\left(\sum_{n=0}^{N-1} \gamma_{T_2}(n)^2\right)\left(\sum_{n=0}^{N-1} \gamma(n)^2\right)} \tag{8}$$

Finally, pitch weighting filter 105 carries out pitch enhancement by applying the pitch weighting filter shown in expression (2) to the decoded speech and obtains a pitch-enhanced output signal.

The pitch-enhanced output is then subjected to processing such as formant enhancement, high-frequency enhancement and gain control and becomes the post filter output. Carrying out such processing provides speech decoding enabling pitch enhancement with an excellent perceptual quality.

According to Embodiment 1, comprising second lag value calculator 103 in addition to first lag value calculator 102, calculating optimal second lag value T2 about twice first lag value T1 and using the decoded speech signal with that lag value T2 in addition to the decoded speech signal with the first lag value for pitch enhancement means using a signal with the second lag value (2 pitch cycles before) with high waveform similarity in addition to the first lag value (1 pitch cycle before) most similar to the signal waveform subject to pitch enhancement, making it possible to realize pitch enhancement smoother by using two or more past similar signal waveforms and provide pitch enhancement with a high degree of enhancement without sacrificing the naturalness of the decoded speech.

(Embodiment 2)

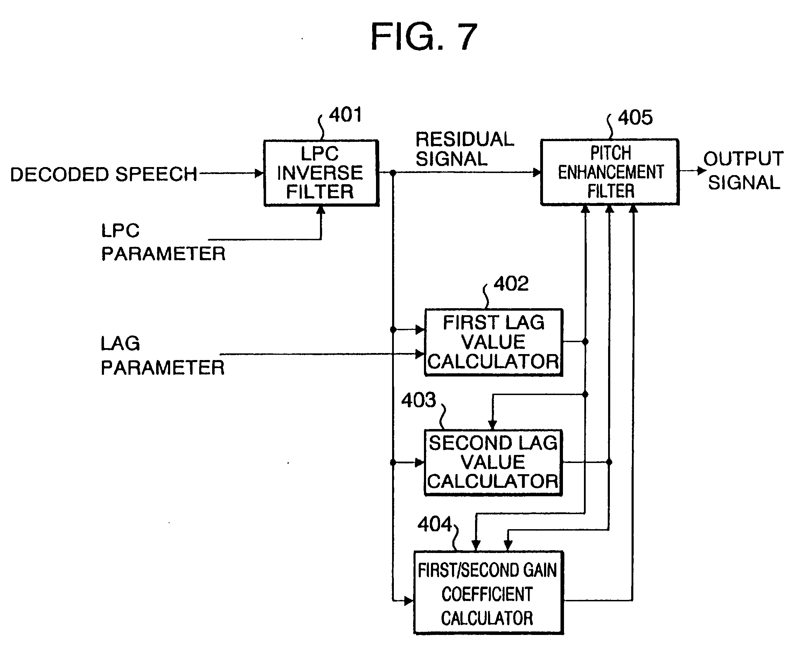

FIG.7 is a functional block of a pitch enhancement section of a post filter of Embodiment 2 of the present invention. The post filter of Embodiment 2 uses a residual signal which is the output of the LPC inverse filter as the input of pitch weighting filter 105 instead of a decoded speech signal. The rest of the configuration is the same as that in Embodiment 1.

Embodiment 2 carries out pitch enhancement processing using a residual signal and gain coefficient with a first and second lag value. Here, it uses, as the filter characteristic of LPC inverse filter 101, the characteristic corresponding to the numerator term of the formant enhancement filter shown in expression (9) which is carried out in the post stage of the pitch enhancement processing. Where, ai (i=1, ..., Np) is an LPC coefficient, $\gamma_n$ and $\gamma_d$ are constants that control the degree of formant enhancement and 1/gf is a gain compensation term.

$$H_f(z) = \frac{1}{gf}\frac{1 + \sum_{i=1}^{Np} \gamma_n^i a_i z^{-i}}{1 + \sum_{i=1}^{Np} \gamma_d^i a_i z^{-i}} \tag{9}$$

According to Embodiment 2 as shown above, the LPC inverse filtering to obtain a residual signal used when calculating a lag value and a gain coefficient used by the pitch weighting filter can also play a part of the formant enhancement filter, reducing the amount of operations.

Embodiments 1 and 2 above describe a case where two lag values, first and second lag values, are used as the lag values used for pitch enhancement, but it is also possible to implement a method using more than two lag values.

In that case, it is also possible to improve the performance of the pitch enhancement by using a lag value about 1/2 (or 1/n (n=3, 4, ...)) of the first lag value when n-times pitch error (erroneously calculating the lag value as a value n times the original value) occurs in calculating the first lag value.

Furthermore, Embodiments 1 and 2 above describe a method of calculating a lag value and gain coefficient using a residual signal after the LPC inverse filter, but it is also possible to calculate them directly from the decoded speech signal.

As seen above, the present invention uses, in addition to the signal of the first lag value (1 pitch cycle before) most similar to the signal waveform subject to pitch enhancement, the signal of the second lag value (2 pitch cycles before) with high waveform similarity and thereby achieves the effect of implementing smoother pitch enhancement than using past two or more similar signal waveforms and performing pitch enhancement with a high degree of enhancement without sacrificing the naturalness of the decoded speech.

Moreover, the present invention includes one that operates as a pitch enhancement apparatus using a program that implements the aforementioned pitch enhancing method by software stored in a recording medium such as magnetic disk, magneto-optical disk and ROM.

The embodiments above describe a case used in the CELP-type coder, but the present invention is also applicable to cases used in the other types of coders.

This application is based on the Japanese Patent Application No.HEI 10-027710 filed on January 26, 1998, entire content of which is expressly incorporated by reference herein.

Industrial Applicability

The pitch enhancing method and apparatus of the present invention can be applied to base station apparatuses and communication terminal apparatuses in radio communication systems.

**Claims**

1. A pitch enhancing method carrying out enhancement of a decoded speech, by calculating a first lag value indicating a delay to a signal waveform similar to the signal waveform subject to pitch enhancement from at least the decoded speech or lag parameters used for speech decoding, calculating at least one of other lag values indicating a delay to other signal waveforms similar to said signal waveform subject to pitch enhancement based on said first lag value and using the waveforms corresponding to said plurality of lag values.

2. The pitch enhancing method according to claim 1, wherein other lag values are n times the first lag value or n times the integer part of the first lag value or close to that value.

3. A pitch enhancing method carrying out pitch enhancement of a decoded speech using a decoded speech, first and second lag values and first and second gain coefficients, by calculating a first lag value indicating a delay to a signal waveform similar to the signal waveform subject to pitch enhancement from at least the decoded speech or lag parameters used for speech decoding, calculating a second lag value indicating a delay to another signal waveform similar to said signal waveform subject to pitch enhancement based on said first lag value, calculating a first and second gain coefficients corresponding to the first and second lag values from said first and second lag values and said decoded speech.

4. The pitch enhancing method according to claim 3, wherein the second lag value is a lag value corresponding to a maximum value of the decoded speech of the correlation value or related value of the decoded speech or the related signal from among lag value candidates centered on the first lag value or a value twice the first lag value or the integer part of the first lag value including fractions before and after that value.

5. The pitch enhancing method according to claim 3, wherein if the second lag value exceeds the buffer length of the decoded speech or related signal used for calculation of lag values, the decoded speech with said second lag value or related signal corresponding to said second lag value is not used for pitch enhancement.

6. The pitch enhancing method according to claim 3, wherein if a normalized correlation value of the decoded speech or related signal corresponding to the first or second lag value is not more than a threshold, the decoded speech or related signal corresponding to said lag value is not used for pitch enhancement.

7. The pitch enhancing method according to claim 3, which uses a residual signal obtained by applying an LPC inverse filter to the decoded speech as a signal related to a decoded speech used for calculation of lag values and correlation values.

8. The pitch enhancing method according to claim 3, which uses a residual signal obtained by applying an LPC inverse filter to the decoded speech instead of the decoded speech as an input for pitch weighting filtering.

9. A speech decoding method, which applies the pitch enhancing method according to claim 1 to post filtering on the decoding side.

10. A pitch enhancement apparatus, comprising:

a first lag value calculator that calculates a first lag value indicating a delay to a signal waveform similar to the signal waveform subject to pitch enhancement from at least the decoded speech or lag parameters used for speech decoding;

a second lag value calculator that calculates a second lag value indicating a delay to another signal waveform similar to said signal waveform subject to pitch enhancement based on said first lag value;

a first and second gain coefficient calculator that calculates a first and second gain coefficients corresponding to the first and second lag values from said first and second lag values and said decoded speech; and

a pitch weighting filter that carries out pitch weighting filtering using said decoded speech, first and second lag values and first and second gain coefficients.

**11.** The pitch enhancement apparatus according to claim 10, which comprises an LPC inverse filter that carries out LPC inverse filtering on the decoded speech to obtain a residual signal and uses said residual signal to calculate a first and second lag values and gain coefficients.

**12.** A pitch enhancement apparatus, comprising:

an LPC inverse filter that carries out LPC inverse filtering on a decoded speech to obtain a residual signal;

a first lag value calculator that calculates a first lag value indicating a delay to a signal waveform similar to the signal waveform subject to pitch enhancement from at least said residual signal or lag parameters used for speech decoding;

a second lag value calculator that calculates a second lag value indicating a delay to another signal waveform similar to said signal waveform subject to pitch enhancement from said first lag value and said residual signal;

a first and second gain coefficient calculator that calculates a first and second gain coefficients corresponding to the first and second lag values from said first and second lag values and said residual signal; and

a pitch weighting filter that carries out pitch weighting filtering using said residual signal, first and second lag values and first and second gain coefficients.

**13.** A speech decoder, which applies the pitch enhancement apparatus according to claim 10 to a part of the post filter on the decoding side.

**14.** A digital speech communication apparatus, which applies the pitch enhancement apparatus according to claim 10 to a part of the post filter on the decoding side.

**15.** A computer program product, comprising:

a medium readable by a computer;

a first program instruction means for instructing a computer processor to calculate a first lag value indicating a delay to a signal waveform similar to the signal waveform subject to pitch enhancement from at least the decoded speech or lag parameters used for speech decoding;

a second program instruction means for instructing the computer processor to calculate at least one of other lag values indicating a delay to another signal waveforms similar to said signal waveform subject to pitch enhancement based on said first lag value; and

a third program instruction means for instructing the computer processor to carry out pitch enhancement of the decoded speech using the signal waveforms corresponding to said plurality of lag values,

whose program instruction means are stored in an executable format in said medium and loaded to a computer memory to operate the computer when executed by the relevant processor.

# FIG. 1

1 POST FILTER

DECODED SPEECH →

| 2 | 3 | 4 | 5 |
|---|---|---|---|
| PITCH ENHANCEMENT SECTION | FORMANT ENHANCEMENT SECTION | HIGH - FREQUENCY ENHANCEMENT SECTION | GAIN CONTROL SECTION |

→ OUTPUT SIGNAL

LPC PARAMETER

LAG PARAMETER

# FIG. 2

2

DECODED SPEECH →

21
LPC INVERSE FILTER

24
PITCH ENHANCEMENT SECTION

→ OUTPUT SIGNAL

LPC PARAMETER →

LAG PARAMETER →

22
LAG VALUE CALCULATOR

23
GAIN COEFFICIENT CALCULATOR

# FIG. 3

101 — microphone → 102 A/D → 103 SPEECH ENCODER → 104 MODULATOR/DEMODULATOR → 105 RADIO TRANSMISSION SECTION → 106 antenna

107 antenna → 108 RADIO RECEPTION SECTION → 104 MODULATOR/DEMODULATOR → 109 SPEECH DECODER → 110 D/A → 111 speaker

## FIG. 4

# FIG. 5

DECODED SPEECH ──────────────────► PITCH ENHANCEMENT FILTER ──► OUTPUT SIGNAL (305)

LPC PARAMETER ──► LPC INVERSE FILTER (301)

FIRST LAG VALUE CALCULATOR (302)

LAG PARAMETER

SECOND LAG VALUE CALCULATOR (303)

FIRST/SECOND GAIN COEFFICIENT CALCULATOR (304)

EP 0 971 337 A1

# FIG. 6

START

↓

| LPC INVERSE FILTERING | ST101 |

↓

| FIRST LAG VALUE CALCULATION | ST102 |

↓

| SECOND LAG VALUE CALCULATION | ST103 |

↓

| FIRST/SECOND GAIN COEFFICIENT CALCULATION | ST104 |

↓

| PITCH ENHANCEMENT FILTERING | ST105 |

↓

END

# FIG. 7

DECODED SPEECH → **LPC INVERSE FILTER** (401) → RESIDUAL SIGNAL → **PITCH ENHANCEMENT FILTER** (405) → OUTPUT SIGNAL

LPC PARAMETER →

LAG PARAMETER →

**FIRST LAG VALUE CALCULATOR** (402)

**SECOND LAG VALUE CALCULATOR** (403)

**FIRST/SECOND GAIN COEFFICIENT CALCULATOR** (404)

EP 0 971 337 A1

## INTERNATIONAL SEARCH REPORT

| International application No. |
| --- |
| PCT/JP99/00293 |

**A. CLASSIFICATION OF SUBJECT MATTER**
Int.Cl⁶ G10L9/00, 9/18, H04B14/04, H03M7/30

According to International Patent Classification (IPC) or to both national classification and IPC

**B. FIELDS SEARCHED**

Minimum documentation searched (classification system followed by classification symbols)
Int.Cl⁶ G10L9/00-9/18

Documentation searched other than minimum documentation to the extent that such documents are included in the fields searched
Jitsuyo Shinan Koho          1926-1998    Toroku Jitsuyo Shinan Koho    1994-1998
Kokai Jitsuyo Shinan Koho    1971-1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 60-118898, A (Fujitsu Ltd.), 26 June, 1985 (26. 06. 85) (Family: none) | 1-15 |
| A | JP, 5-173596, A (Oki Electric Industry Co., Ltd.), 13 July, 1993 (13. 07. 93) (Family: none) | 1-15 |
| A | JP, 8-179795, A (NEC Corp.), 12 July, 1996 (12. 07. 96) & EP, 720145, A2 & US, 5751900, A | 1-15 |
| A | JP, 8-211895, A (Rockwell International Corp.), 20 August, 1996 (20. 08. 96) (Family: none) | 1-15 |
| A | JP, 9-152897, A (Hitachi,Ltd.), 10 June, 1997 (10. 06. 97) (Family: none) | 1-15 |
| A | JP, 9-212194, A (Sony Corp.), 15 August, 1997 (15. 08. 97) (Family: none) | 1-15 |
| P, A | JP, 10-39899, A (NEC Corp.), 13 February, 1998 (13. 02. 98) (Family: none) | 1-15 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 April, 1999 (20. 04. 99) | 11 May, 1999 (11. 05. 99) |

| Name and mailing address of the ISA/ Japanese Patent Office | Authorized officer |
| --- | --- |
| Facsimile No. | Telephone No. |

Form PCT/ISA/210 (second sheet) (July 1992)